(19) Europäisches Patentamt
European Patent Office
Office européen des brevets

(11) EP 1 600 799 A1

(12) **EUROPEAN PATENT APPLICATION**
published in accordance with Art. 158(3) EPC

(43) Date of publication:
**30.11.2005 Bulletin 2005/48**

(21) Application number: **04714462.1**

(22) Date of filing: **25.02.2004**

(51) Int Cl.[7]: **G02B 5/30**, G11B 7/135, C08J 5/18, B32B 7/02

(86) International application number:
**PCT/JP2004/002220**

(87) International publication number:
**WO 2004/079412 (16.09.2004 Gazette 2004/38)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **03.03.2003 JP 2003055115**

(71) Applicant: **JSR Corporation**
**Tokyo 104-8410 (JP)**

(72) Inventors:
- **USHINO, Takuhiro, Jsr Corporation**
  **Tokyo 1048410 (JP)**
- **SEKIGUCHI, Masayuki, Jsr Corporation**
  **Tokyo 1048410 (JP)**
- **HIRONO, Tatsuya, Jsr Corporation**
  **Tokyo 1048410 (JP)**

(74) Representative: **TBK-Patent**
**Bavariaring 4-6**
**80336 München (DE)**

(54) **LAMINATED WAVELENGTH PLATE**

(57) A laminated wavelength plate including a cyclic olefin based resin film and a transparent crystal plate having optical anisotropy bonded to each other, wherein an angle defined by an optical axis of the cyclic olefin based resin film and an optical axis of the transparent crystal plate having optical anisotropy falls within the range of from 0 to 90 degrees. The laminated wavelength plate of the invention is a broadband wavelength plate (retardation plate) which is stable against heat, humidity and the like, is effective against plural laser beams having a different wavelength, and can be used as a wavelength plate for optical information recording and reproducing devices.

*FIG. 1*

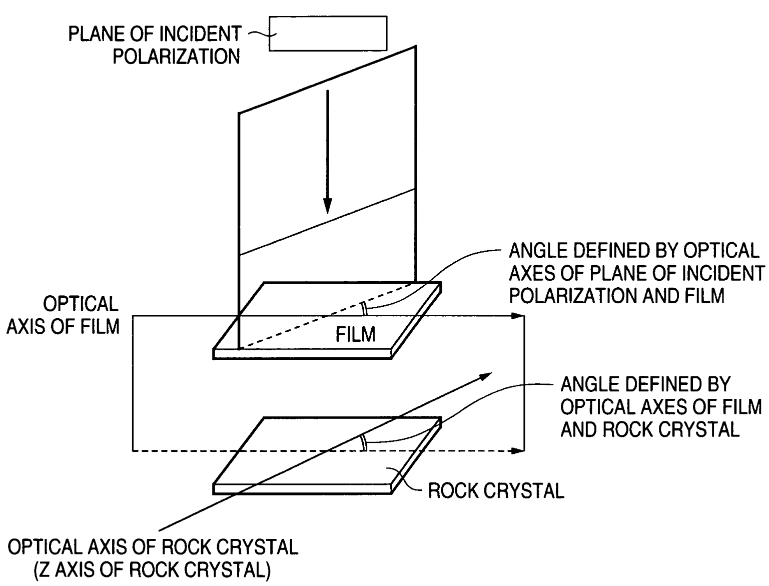


EP 1 600 799 A1

## Description

### TECHNICAL FIELD

The present invention relates a wavelength plate which can be used for optical information recording and reproducing devices and the like. More particularly, the invention relates to a laminated wavelength plate comprising a cyclic olefin based resin film capable of imparting a retardation to transmitted light and a transparent crystal plate having optical anisotropy bonded to each other, which is a wavelength plate exhibiting satisfactory polarizing characteristics over a long period of time in a broad wavelength range.

### BACKGROUND ART

An optical disk device is an optical information recording and reproducing device which has recently extended largely in view of non-contact, a large quantity of information per unit volume, high-speed access properties, low costs, and so on, and various recording media are developed while utilizing such characteristic features. For example, there have been developed compact disk (CD), laser disk (LD), CR-ROM, DVD-ROM, and the like, which reproduce previously recorded information as sounds, images or computer programs; CD-R and DVD-R which can write information only one time by laser and reproduce the subject information; and magneto-optical disk (MO), DVD-RAM, DVD-RW, and the like, which can perform repeated recording and reproduction of information.

As an optical device for recording and/or reproducing information in such an optical information recording and reproducing device, there is known an optical pick-up device in which a polarizing beam splitter (PBS) and a 1/4 $\lambda$ wavelength plate (QWP) (hereinafter sometimes referred to as "quarter wavelength plate") are aligned in the middle of an optical path from a laser beam source to an optical detector.

The quarter wavelength plate as referred to herein is one that provides a $\lambda/4$ optical path difference (accordingly, a retardation of $\pi/2$) between polarizing components having a specific wavelength and intersecting each other. In the foregoing optical pick-up device, linearly polarized light (S wave) is irradiated from a laser beam source, passes through the PBS and then passes through the quarter wavelength plate, whereby the linearly polarized light becomes circularly polarized light, and the circularly polarized light is then irradiated to an optical recording medium by a condenser lens. It is constructed in such a manner that return light which has been reflected from the optical recording medium again follows the same course and passes through the quarter wavelength plate, whereby the azimuth of the circularly polarized light is converted by 90 degrees and the circularly polarized light becomes linearly polarized light (P wave), and the linearly polarized light then passes through the PBS and is guided into an optical detector.

Also, as a rewritable type magneto-optical disk device, there is known one in which a 1/2 $\lambda$ wavelength plate (hereinafter sometimes referred to as "half wavelength plate") is aligned in the middle of an optical path wherein irradiated light from a laser beam source passes through a polarizer and PBS and is irradiated to a magneto-optical disk, and return light which has been reflected by the magneto-optical disk again passes through the PBS and reaches an optical detector.

The half wavelength plate as referred to herein is one that provides a $\lambda/2$ optical path difference (accordingly, a retardation of $\pi$) between polarizing components having a specific wavelength and intersecting each other.

As such wavelength plates, there have hitherto been used inorganic wavelength plates such as wavelength plates formed of a crystal plate having optical anisotropy, such as mica, quartz, rock crystal, calcite, $LiNbO_3$, and $LiTaO_3$; wavelength plates having a birefringent film on the surface of a base substrate obtained by obliquely vapor depositing an inorganic material to a base substrate such as a glass substrate; and wavelength plates having an LB (Langmuir-Blodget) film having birefringence.

Also, there have been used wavelength plates prepared by bonding a film obtained by stretching a transparent resin film such as polycarbonate, polyvinyl alcohol (PVA), polyvinyl butyral (PVB), polyethylene terephthalate (PET), polypropylene (PP), polyallylates, polysulfones, polyethersulfones, and acrylic resins, thereby providing a function to impart a retardation to transmitted light (this film will be referred to as "retardation film") onto a glass substrate for the purpose of keeping flatness and shaping or interposing this film between two glass substrates.

Now, recently, DVD is being rapidly spread as a high-density information recording medium. On the other hand, reproduction-only optical disks such as CD, CR-ROM, and CD-R are already widely spread in the market. Therefore, optical disk devices are eagerly required to have a recording and reproducing function against these various kinds of optical disks. Also, following an enlargement of the application field, realization of miniaturization and low price of optical disk devices is required. Therefore, it has been proposed to use a broadband wavelength plate (retardation plate) for corresponding to plural reading and writing lasers (JP-A-2001-101700 and JP-A-2001-208913).

However, these disclosed broadband wavelength plates (retardation plates) have a structure in which plural sheets of retardation films are merely laminated among the films each other. Accordingly, even when such a wavelength plate is bonded and fixed to a support such as a glass substrate and then provided for use, during laminating a retardation film (1) as bonded on the support and a retardation film (2) as laminated on the this retardation film (1), because of influences such as heat and humidity at the time of device assembling or at the time of use, a deviation in a lamination angle (an optical axis angle between the two sheets of films) as adjusted is generated, or the retardation is gradually varied. Thus, there was caused such a problem that good characteristics as possessed at the initial stage are changed to a non-negligible extent.

Further, it is attempted to optimize optical characteristics by bonding a retardation film to rock crystal which is an inorganic single crystal plate (JP-A-2002-116321).

However, according to the disclosed wavelength plate, although it is stated that when light having a specific wavelength is made incident into the wavelength plate from the oblique direction, a retardation of transmitted light does not depend upon an angle of incidence, there was involved such a problem that it is impossible to impart arbitrary retardation characteristics to lights over a broad wavelength range.

The invention is to provide a broadband wavelength plate (retardation plate) which is stable against heat, humidity and the like, is effective against plural laser beams having a different wavelength, and can be used as a wavelength plate for optical information recording and reproducing devices.

## DISCLOSURE OF THE INVENTION

In order to solve the foregoing problems, the present inventors made extensive and intensive investigations. As a result, it has been found that by bonding a cyclic olefin based resin film having a specific retardation to a transparent crystal plate having optical anisotropy at a specific angle of optical axes, a broadband wavelength plate (retardation plate) which is stable against heat, humidity and the like, is effective against plural lights having a different wavelength, and can be used as a wavelength plate for optical information recording and reproducing devices is obtained, leading to accomplishment of the invention.

Also, in particular, it has been found that by using rock crystal as the transparent crystal plate having optical anisotropy, a broadband wavelength plate (retardation plate) which is excellent in optical characteristics and especially excellent in heat resistance and stability of retardation, leading to accomplishment of the invention.

## BRIEF DESCRIPTION OF THE DRAWING

Fig. 1 is a view to show the mutual relationship of angle among an optical axis of a retardation film, an optical axis of rock crystal and a plane of vibration of incident polarization.

## BEST MODE FOR CARRYING OUT THE INVENTION

The invention will be hereunder described in detail.

In the invention, the film which is used in the laminated wavelength plate is a transparent resin film made of a material containing a cyclic olefin based resin, and preferably a film obtained by stretching it. The use of such a film is preferable because the resulting laminated wavelength plate is especially excellent in view of heat resistance and stability of retardation. Also, as the transparent crystal plate having optical anisotropy which is used in the laminated wavelength plate, there are no particular limitations, and the foregoing known materials can be used. However, the use of rock crystal is preferable because the resulting laminated wavelength plate is especially excellent in view of heat resistance and stability of retardation.

Examples of the cyclic olefin based resin which is used in the invention include the following (co)polymers.

(1) A ring-opening polymer of a specific monomer represented by the following general formula (1).
(2) A ring-opening copolymer of a specific monomer represented by the following general formula (1) and a copolymerizable monomer.
(3) A hydrogenated (co)polymer of the foregoing ring-opening (co)polymer (1) or (2).
(4) A (co)polymer resulting from cyclization of the foregoing ring-opening (co)polymer (1) or (2) by the Friedel-Crafts reaction and then hydrogenation.
(5) A saturated copolymer of a specific monomer represented by the following general formula (1) and an unsaturated double bond-containing compound.
(6) An addition type (co)polymer of at least one monomer selected from a specific monomer represented by the following general formula (1), a vinyl based cyclic hydrocarbon based monomer and a cyclopentadiene based monomer, and a hydrogenated (co)polymer thereof.

General Formula (1)

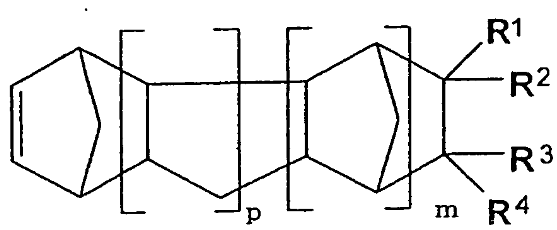

[In the formula, $R^1$ to $R^4$ each represents a hydrogen atom, a halogen atom, a hydrocarbon group having from 1 to 30 carbon atoms, or other monovalent organic group, and may be the same or different. $R^1$ and $R^2$, or $R^3$ and $R^4$ may be taken together to form a divalent hydrocarbon group; and $R^1$ or $R^2$ and $R^3$ or $R^4$ may be bonded to each other to form a monocyclic or polycyclic structure. m represents 0 or a positive integer; and p represents 0 or a positive integer.]

<Specific monomer>

Specific examples of the foregoing specific monomer will be given below, but it should not be construed that the invention is limited to these specific examples.

Bicyclo[2.2.1]hept-2-ene
5-Methylbicyclo[2.2.1]hept-2-ene
5-Ethylbicyclo[2.2.1]hept-2-ene
5-Ethylidenebicyclo[2.2.1]hept-2-ene
5-Phenylbicyclo[2.2.1]hept-2-ene
5-Methoxycarbonylbicyclo[2.2.1]hept-2-ene
5-Ethoxycarbonylbicyclo[2.2.1]hept-2-ene
5-Phenoxycarbonylbicyclo[2.2.1]hept-2-ene
5-Methyl-5-methoxycarbonylbicyclo[2.2.1]hept-2-ene
5-Cyanobicyclo[2.2.1]hept-2-ene
5-Fluorobicyclo[2.2.1]hept-2-ene
5-Fluoromethylbicyclo[2.2.1]hept-2-ene
5-Trifluoromethylbicyclo[2.2.1]hept-2-ene
5-Pentafluoroethylbicyclo[2.2.1]hept-2-ene
5,5-Difluorobicyclo[2.2.1]hept-2-ene
5,6-Difluorobicyclo[2.2.1]hept-2-ene
5,5-Bis(trifluoromethyl)bicyclo[2.2.1]hept-2-ene
5,6-Bis(trifluoromethyl)bicyclo[2.2.1]hept-2-ene
5-Methyl-5-trifluoromethylbicyclo[2.2.1]hept-2-ene
5,5,6-Trifluorobicyclo[2.2.1]hept-2-ene
5,5,6-Tris(fluoromethyl)bicyclo[2.2.1]hept-2-ene
5,5,6,6-Tetrafluorobicyclo[2.2.1]hept-2-ene
5,5,6,6-Tetrakis(trifluoromethyl)bicyclo[2.2.1]hept-2-ene
5,5-Difluoro-6,6-bis(trifluoromethyl)bicyclo[2.2.1]hept-2-ene
5,6-Difluoro-5,6-bis(trifluoromethyl)bicyclo[2.2.1]hept-2-ene
5,5,6-Trifluoro-5-trifluoromethylbicyclo[2.2.1]hept-2-ene
5-Fluoro-5-pentafluoroethyl-6,6-bis(trifluoromethyl)bicyclo[2.2.1]hept-2-ene
5,6-Difluoro-5-heptafluoro-isopropyl-6-trifluoromethylbicyclo[2.2.1]hept-2-ene
5-Chloro-5,6,6-trifluorobicyclo[2.2.1]hept-2-ene
5,6-Dichloro-5,6-bis(trifluoromethyl)bicyclo[2.2.1]hept-2-ene
5,5,6-Trifluoro-6-trifluoromethoxybicyclo[2.2.1]hept-2-ene
5,5,6-Trifluoro-6-heptafluoropropoxybicyclo[2.2.1]hept-2-ene
Tricyclo[5.2.1.$0^{2,6}$]-8-decene
Tricyclo[6.2.1.$0^{2,7}$]-3-undecene
Tetracyclo[4.4.0.$1^{2,5}$.$1^{7,10}$]-3-dodecene
8-Methyltetracyclo[4.4.0.$1^{2,5}$.$1^{7,10}$]-3-dodecene

8-Ethyltetracyclo[$4.4.0.1^{2,5}.1^{7,10}$]-3-dodecene
8-Ethylidenetetracyclo[$4.4.0.1^{2,5}.1^{7,10}$]-3-dodecene
8-Phenyltetracyclo[$4.4.0.1^{2,5}.1^{7,10}$]-3-dodecene
8-Methoxycarbonyltetracyclo[$4.4.0.1^{2,5}.1^{7,10}$]-3-dodecene
8-Ethoxycarbonyltetracyclo[$4.4.0.1^{2,5}.1^{7,10}$]-3-dodecene
8-n-Propoxycarbonyltetracyclo[$4.4.0.1^{2,5}.1^{7,10}$]-3-dodecene
8-Isopropoxycarbonyltetracyclo[$4.4.0.1^{2,5}.1^{7,10}$]-3-dodecene
8-n-Butoxycarbonyltetracyclo[$4.4.0.1^{2,5}.1^{7,10}$]-3-dodecene
8-Phenoxycarbonyltetracyclo[$4.4.0.1^{2,5}.1^{7,10}$]-3-dodecene
8-Methyl-8-methoxycarbonyltetracyclo[$4.4.0.1^{2,5}.1^{7,10}$]-3-dodecene
8-Methyl-8-ethoxycarbonyltetracyclo[$4.4.0.1^{2,5}.1^{7,10}$]-3-dodecene
8-Methyl-8-n-propoxycarbonyltetracyclo[$4.4.0.1^{2,5}.1^{7,10}$]-3-dodecene
8-Methyl-8-isopropoxycarbonyltetracyclo[$4.4.0.1^{2,5}.1^{7,10}$]-3-dodecene
8-Methyl-8-n-butoxycarbonyltetracyclo[$4.4.0.1^{2,5}.1^{7,10}$]-3-dodecene
8-Methyl-8-phenoxycarbonyltetracyclo[$4.4.0.1^{2,5}.1^{7,10}$]-3-dodecene
8-Fluorotetracyclo[$4.4.0.1^{2,5}.1^{7,10}$]-3-dodecene
8-Fluoromethyltetracyclo[$4.4.0.1^{2,5}.1^{7,10}$]-3-dodecene
8-Difluoromethyltetracyclo[$4.4.0.1^{2,5}.1^{7,10}$]-3-dodecene
8-Trifluoromethyltetracyclo[$4.4.0.1^{2,5}.1^{7,10}$]-3-dodecene
8-Pentafluoroethyltetracyclo[$4.4.0.1^{2,5}.1^{7,10}$]-3-dodecene
8,8-Difluorotetracyclo[$4.4.0.1^{2,5}.1^{7,10}$]-3-dodecene
8,9-Difluorotetracyclo[$4.4.0.1^{2,5}.1^{7,10}$]-3-dodecene
8,8-Bis(trifluoromethyl)tetracyclo[$4.4.0.1^{2,5}.1^{7,10}$]-3-dodecene
8,9-Bis(trifluoromethyl)tetracyclo[$4.4.0.1^{2,5}.1^{7,10}$]-3-dodecene
8-Methyl-8-trifluoromethyltetracyclo[$4.4.0.1^{2,5}.1^{7,10}$]-3-dodecene
8,8,9-Trifluorotetracyclo[$4.4.0.1^{2,5}.1^{7,10}$]-3-dodecene
8,8,9-Tris(trifluoromethyl)tetracyclo[$4.4.0.1^{2,5}.1^{7,10}$]-3-dodecene
8,8,9,9-Tetrafluorotetracyclo[$4.4.0.1^{2,5}.1^{7,10}$]-3-dodecene
8,8,9,9-Tetrakis(trifluoromethyl)tetracyclo[$4.4.0.1^{2,5}.1^{7,10}$]-3-dodecene
8,8-Difluoro-9,9-bis(trifluoromethyl)tetracyclo[$4.4.0.1^{2,5}.1^{7,10}$]-3-dodecene
8,9-Difluoro-8,9-bis(trifluoromethyl)tetracyclo[$4.4.0.1^{2,5}.1^{7,10}$]-3-dodecene
8,8,9-Trifluoro-9-trifluoromethyltetracyclo[$4.4.0.1^{2,5}.1^{7,10}$]-3-dodecene
8,8,9-Trifluoro-9-trifluoromethoxytetracyclo[$4.4.0.1^{2,5}.1^{7,10}$]-3-dodecene
8,8,9-Trifluoro-9-pentafluoropropoxytetracyclo[$4.4.0.1^{2,5}.1^{7,10}$]-3-dodecene
8-Fluoro-8-pentafluoroethyl-9,9-bis(trifluoromethyl)tetracyclo[$4.4.0.1^{2,5}.1^{7,10}$]-3-dodecene
8,9-Difluoro-8-heptafluoro-isopropyl-9-trifluoromethyltetracyclo-[$4.4.0.1^{2,5}.1^{7,10}$]-3-dodecene
8-Chloro-8,9,9-trifluorotetracyclo[$4.4.0.1^{2,5}.1^{7,10}$]-3-dodecene
8,9-Dichloro-8,9-bis(trifluoromethyl)tetracyclo[$4.4.0.1^{2,5}.1^{7,10}$]-3-dodecene
8-(2,2,2-Trifluoroethoxycarbonyl)tetracyclo[$4.4.0.1^{2,5}.1^{7,10}$]-3-dodecene
8-Methyl-8-(2,2,2-trifluoroethoxycarbonyl)tetracyclo[$4.4.0.1^{2,5}.1^{7,10}$]-3-dodecene

These can be used singly or in combinations of two or more kinds thereof,

Of the specific monomers, ones represented by the foregoing general formula(1) wherein $R^1$ and $R^3$ each represents a hydrogen atom or a hydrocarbon group having from 1 to 10 carbon atoms, more preferably a hydrogen atom or a hydrocarbon group having from 1 to 4 carbon atoms, and especially preferably a hydrogen atom or a hydrocarbon group having from 1 to 2 carbon atoms; $R^2$ and $R^4$ each represents a hydrogen atom or a monovalent organic group, and at least one of $R^2$ and $R^4$ represents a polar group having polarity other than a hydrogen atom and a hydrocarbon group; and m represents an integer of from 0 to 3, and p represents an integer of from 0 to 3, more preferably (m + p) = 0 to 4, further preferably (m + p) = 0 to 2, and especially preferably, m = 1 and p = 0 are preferable.

Examples of the polar group of the foregoing specific monomer include a halogen, a carboxyl group, a hydroxyl group, an alkoxycarbonyl group, an aryloxycarbonyl group, an amino group, an amide group, a cyano group, an acyl group, a silyl group, an alkoxysilyl group, and an aryloxysilyl group. Of these, a carboxyl group, an alkoxycarbonyl group, and an aryloxycarbonyl group are preferable; and an alkoxycarbonyl group is especially preferable.

Also, these polar groups may be bonded via an alkylene group having from 1 to 10 carbon atoms or a connecting group containing an oxygen atom, a nitrogen atom, or a sulfur atom.

Of the specific monomers, a monomer in which at least one of $R^2$ and $R^4$ is a polar group represented by the formula, $-(CH_2)_nCOOR$ is preferable because the resulting cyclic olefin based resin has a high glass transition temperature, low hygroscopicity, and excellent adhesion to various materials. In the formation directed to the foregoing specific polar group, R represents a hydrocarbon group having usually from 1 to 12 carbon atoms, preferably from 1

to 4 carbon atoms, and more preferably from 1 to 2 carbon atoms, and especially preferably an alkyl group. n is usually from 0 to 5; and a smaller value of n is preferable because the glass transition temperature of the resulting cyclic olefin based resin is high. Further, the specific monomer wherein n is 0 is preferable because not only its synthesis is easy, but also the glass transition temperature of the resulting cyclic olefin based resin is high.

Further, in the specific monomer, at least one of $R^1$ and $R^2$ in the foregoing general formula (1) is preferably an alkyl group, more preferably an alkyl group having from 1 to 4 carbon atoms, further preferably an alkyl group having 1 to 2 carbon atom, and especially preferably a methyl group. In particular, it is preferable that this alkyl group is bonded to the same carbon atom as a carbon atom to which a specific polar group represented by the foregoing formula, $-(CH_2)_nCOOR$ is bonded. Also, the specific monomer represented by the general formula (1) wherein p = 0 and m = 1 is preferable because a cyclic olefin based resin having a high glass transition temperature is obtained.

Of these, 8-methyl-8-methoxycarbonyltetracyclo[4.4.0.$1^{2,5}$.$1^{7,10}$]-3-dodecene is preferable in view of the heat resistance of the resulting cyclic olefin based resin and the matter that a change of the retardation before and after sticking when a transparent resin film made of a material containing the subject cyclic olefin based resin is stuck and used as the wavelength plate of the invention and influences due to heat and temperature when used over a long period of time against a retardation value, an aberration and the like are suppressed as far as possible.

<Copolymerizable monomer>

Specific examples of the copolymerizable monomer include cycloolefins such as cyclobutene, cyclopentene, cycloheptene, and cyclooctene. The carbon atom number of the cycloolefin is preferably from 4 to 20, and more preferably from 5 to 12. These can be used singly or in combinations of two or more kinds thereof

A use range of the specific monomer to the copolymerizable monomer is preferably from 100/0 to 50/50, and more preferably from 100/0 to 60/40 in terms of a weight ratio.

<Ring-opening polymerization catalyst>

In the invention, the ring-opening polymerization reaction for obtaining the ring-opening polymer (1) of a specific monomer and the ring-opening copolymer (2) of a specific monomer and a copolymerizable monomer is carried out in the presence of a metathesis catalyst.

This metathesis catalyst is a catalyst comprising a combination of (a) at least one member selected from W, Mo and Re compounds and (b) at least one member selected from compounds of the IA group elements (for example, Li, Na, and K), the IIA group elements (for example, Mg and Ca), the IIB group elements (for example, Zn, Cd, and Hg), the IIIA group elements (for example, B and Al), the IVA group elements (for example, Si, Sn, and Pb), or the IVB group elements (for example, Ti and Zr) of the Deming's periodic table and containing at least one bond of the element to carbon or bond of the element to hydrogen. Also, in this case, for the purpose of enhancing the activity of the catalyst, the catalyst may be one having (c) an additive as described later added thereto.

Representative examples of the W, Mo or Re compounds which are suitable as the component (a) include compounds described in page 8, left-hand lower half column, line 6 to page 8, right-hand upper half column, line 17 of JP-A-1-132626, such as $WCl_6$, $MoCl_5$, and $ReOCl_3$.

Specific examples of the component (b) include compounds described in page 8, right-hand upper half column, line 18 to page 8, right-hand lower half column, line 3 of JP-A-1-132626, such as n-$C_4H_9Li$, $(C_2H_5)_3Al$, $(C_2H_5)_2AlCl$, $(C_2H_5)_{1.5}AlCl_{1.5}$, $(C_2H_5)AlCl_2$, methylalumoxane, and LiH.

As represents examples of the compound (c) which is an additive, alcohols, aldehydes, ketones, amines, and the like can be suitably used. Further, compounds described in page 8, right-hand lower half column, line 16 to page 9, left-hand upper half column, line 17 of JP-A-1-132626 can be used.

With respect to the amount of the metathesis catalyst to be used, a molar ratio of the foregoing component (a) to the specific monomer is usually in the range of from 1/500 to 1/50,000, and preferably in the range of from 1/1,000 to 1/10,000 in terms of "component (a) to specific monomer".

With respect to the proportion of the component (a) and the component (b), a metal atom ratio of (a) to (b) is in the range of from 1/1 to 1/50, and preferably from 1/2 to 1/30.

With respect to proportion of the component (a) and the component (c), a molar ratio of (c) to (a) is in the range of from 0.005/1 to 15/1, and preferably from 0.05/1 to 7/1.

<Solvent for polymerization reaction>

Examples of a solvent which is used in the ring-opening polymerization reaction (a solvent constituting a molecular weight modifier solution and a solvent of the specific monomer and/or the metathesis catalyst) include alkanes such as pentane, hexane, heptane, octane, nonane, and decane; cycloalkanes such as cyclohexane, cycloheptane, cyclooctane, decalin, and norbornane; aromatic hydrocarbons such as benzene, toluene, xylene, ethylbenzene, and cumene; compounds such as halogenated alkanes and halogenated aryls including chlorobutane, bromohexane, methylene chloride, dichloroethane, hexamethylene dibromide, chlorobenzene, chloroform, and tetrachloroethylene; saturated carboxylic acid esters such as ethyl acetate, n-butyl acetate, isobutyl acetate, methyl propionate, and dimethoxyethane; and ethers such as dibutyl ether, tetrahydrofuran, and dimethoxyethane. These can be used singly or in admixture. Of these, aromatic hydrocarbons are preferable.

The amount of the solvent to be used is usually from 1/1 to 10/1, and preferably from 1/1 to 5/1 in terms of "solvent to specific monomer (weight ratio)".

<Molecular weight modifier>

Though it is possible to adjust the molecular weight of the ring-opening (co)polymer to be obtained depending upon the polymerization temperature, the kind of catalyst, and the kind of solvent, the adjustment is achieved by making a molecular weight modifier co-present in the reaction system in the invention.

Here, examples of the molecular weight modifier that is suitable include styrene as well as $\alpha$-olefins such as ethylene, propene, 1-butene, 1-pentene, 1-hexene, 1-heptene, 1-octene, 1-nonene, and 1-decene. Of these, 1-butene and 1-hexene are especially preferable.

These molecular weight modifies can be used singly or in admixture of two or more kinds thereof.

The amount of the molecular weight modifier to be used is from 0.005 to 0.6 moles, and preferably from 0.02 to 0.5 moles per mole of the specific monomer to be provided for the ring-opening polymerization reaction.

For the purpose of obtaining the ring-opening copolymer (2), the specific monomer and the copolymerizable monomer may be subjected to ring-opening copolymerization. However, the specific monomer may be further subjected to ring-opening polymerization in the presence of a conjugated diene based polymer such as polybutadiene and polyisoprene, a styrene-butadiene copolymer, an ethylene-non-conjugated diene copolymer, an unsaturated hydrocarbon based polymer containing two or more carbon-carbon double bonds in the major chain such as polynorbornene, or the like.

The thus obtained ring-opening (co)polymer is used as it is. However, the hydrogenated (co)polymer (3) which is obtained by further hydrogenating an olefinically unsaturated bond in the molecule is preferable because it is hardly colored by heat or light and is excellent in durability.

<Hydrogenation catalyst>

The hydrogenation reaction is carried out by a usual method. That is, the hydrogenation reaction is carried out by adding a hydrogenation catalyst in a solution of the ring-opening polymer and acting a hydrogen gas of from the atmospheric pressure to 300 atmospheres, and preferably from 3 to 200 atmospheres on the mixture at from 0 to 200 °C, and preferably from 20 to 180 °C.

As the hydrogenation catalyst, ones which are used for the usual hydrogenation reaction of olefinic compounds can be used. Examples of this hydrogenation catalyst include heterogeneous catalysts and homogeneous catalysts.

Examples of the heterogeneous catalyst include solid catalysts in which a noble metal catalyst substance such as palladium, platinum, nickel, rhodium, and ruthenium is carried on a carrier such as carbon, silica, alumina, and titania. Also, examples of the homogeneous catalyst include nickel naphthenate/triethylaluminum, nickel acetylacetonate/triethylaluminum, cobalt octenate/n-butyllithium, titanocene dichloride/diethylaluminum monochloride, rhodium acetate, chlorotris-(triphenylphosphine)rhodium, dichlorotris(triphenylphosphine)ruthenium, chlorohydrocarbonyltris(triphenylphosphine)ruthenium, and dichlorocarbonyltris-(triphenylphosphine)ruthenium. The shape of the catalyst may be powdered or particulate.

Such a hydrogenation catalyst is used in a proportion such that the weight ratio of the ring-opening (co)polymer to the hydrogenation catalyst is from $1/1 \times 10^{-6}$ to 1/2.

The rate of hydrogenation of the hydrogenated (co)polymer is 50 % or more, preferably 90 % or more, more preferably 98 % or more, and most preferably 99 % or more in terms of a value as measured by $^1$H-NMR at 500 MHz. The higher the rate of hydrogenation, the more excellent the stability against heat or light is. Thus, when used as the wavelength plate of the invention, stable characteristics can be obtained over a long period of time.

Incidentally, the "hydrogenation" as referred to in the invention means hydrogenation of an olefinically unsaturated bond in the molecule, such as an unsaturated bond in the principal chain as formed by the ring-opening polymerization but does not mean hydrogenation of an aromatic group when it is present in a ring-opening (co)polymer. In some case, it is preferable that such an aromatic group is not hydrogenated in view of optical characteristics such as control of the retardation value and control of wavelength dependency of the retardation value, or control of the heat resistance and hygroscopicity.

It is possible to stabilize the thus obtained ring-opening (co)polymer by adding thereto known antioxidants

such as 2,6-di-t-butyl-4-methylphenol, 2,2'-dioxy-3,3'-di-t-butyl-5,5'-dimethyldiphenylmethane, and tetrakis[methylene-3- (3,5-di-t-butyl-4-hydroxyphenyl)propionato]methane; ultraviolet absorbers such as 2,4-dihydroxybenzophenone and 2-hydroxy-4-methoxybenzophenone; and the like. Also, for the purpose of improving the processability, additives such as lubricants can be added.

The hydrogenated (co)polymer which is used as the cyclic olefin based resin of the invention preferably has a gel content in the hydrogenated (co)polymer of not more than 5 % by weight, and especially preferably not more than 1 % by weight. When the gel content exceeds 5 % by weight, there is some possibility that flatness of the film obtainable from the subject resin becomes problematic, or that during stretching to form a retardation film, optical deficiencies such as the generation of unevenness of a retardation or luminescent spot are caused.

Also, as the cyclic olefin based resin of the invention, the (co)polymer (4) resulting from cyclization of the foregoing ring-opening (co)polymer (1) or (2) by the Friedel-Crafts reaction and then hydrogenation can be used.

<Cyclization by the Friedel-Crafts reaction>

Although the method for cyclizing the ring-opening (co)polymer (1) or (2) by the Friedel-Crafts reaction is not particularly limited, a known method using an acidic compound as described in JP-A-50-154399 can be employed. Specific examples of the acidic compound which is used include Lewis acids and Bronsted acids such as $AlCl_3$, $BF_3$, $FeCl_3$, $Al_2O_3$, HCl, and $CH_3ClCOOH$.

The cyclized ring-opening (co)polymer can be subjected to hydrogenation in the same manner as in the ring-opening (co)polymer (1) or (2).

Further, as the cyclic olefin based resin of the invention, the saturated copolymer (5) of a specific monomer represented by the following general formula (1) and an unsaturated double bond-containing compound can be used.

<Unsaturated double bond-containing compound>

Examples of the unsaturated double bond-containing compound include olefin based compounds preferably having from 2 to 12 carbon atoms, and more preferably from 2 to 8 carbon atoms, such as ethylene, propylene, and butene.

A range of the specific monomer to the unsaturated double bond-containing compound to be used is preferably from 90/10 to 40/60, and more preferably from 85/15 to 50/50 in terms of a weight ratio.

In the invention, in order to obtain the saturated copolymer (5) of a specific monomer and an unsaturated double bond-containing compound, a usual addition polymerization method can be employed.

<Addition polymerization catalyst>

As a catalyst for synthesizing the foregoing saturated copolymer (5), at least one member selected from titanium compounds, zirconium compounds, and vanadium compounds and an organoaluminum compound as a co-catalyst are used.

Here, examples of the titanium compound include titanium tetrachloride and titanium trichloride; and examples of the zirconium compound include bis(cyclopentadienyl)zirconium chloride and bis(cyclopentadienyl)zirconium dichloride.

Further, examples of the vanadium compound include vanadium compounds represented by the following general formulae and electron donative addition materials thereof.

$$VO(OR)_aX_b$$

or

$$V(OR)_cX_d$$

[Here, R represents a hydrocarbon group; X represents a halogen atom; and $0 \le a \le 3, 0 \le b \le 3, 2 \le (a+b) \le 3, 0 \le c \le 4, 0 \le d \le 4$, and $3 \le (c+d) \le 4$.]

Examples of the foregoing electron donor include oxygen-containing electron donors such as alcohols, phenols, ketones, aldehydes, carboxylic acids, esters of organic acids or inorganic acids, ethers, acid amides, acid anhydrides, and alkoxysilanes; and nitrogen-containing electron donors such as ammonia, amines, nitriles, and isocyanates.

Further, as the organoaluminum compound as a co-catalyst, at least one member selected from compounds

containing at least one aluminum-carbon bond or compounds containing at least one aluminum-hydrogen bond is used.

In the above, for example, in the case of using a vanadium compound, with respect to the ratio of the vanadium compound and the aluminum compound, a ratio of the aluminum atom to the vanadium atom (Al/V) is in the range of 2 or more, preferably from 2 to 50, and especially preferably from 3 to 20.

As a solvent for polymerization reaction which is used for the addition polymerization, the same solvent as used in the ring-opening polymerization reaction can be used. Also, adjustment of the molecular weight of the resulting saturated copolymer (5) is usually carried out using hydrogen.

Further, as the cyclic olefin based resin of the invention, the addition type (co)polymer (6) of at least one monomer selected from a specific monomer, a vinyl based cyclic hydrocarbon based monomer and a cyclopentadiene based monomer, and a hydrogenated (co)polymer thereof can be used.

<Vinyl based cyclic hydrocarbon based monomer>

Examples of the vinyl based cyclic hydrocarbon based monomer include vinylated 5-membered hydrocarbon based monomers including vinylcyclopentene based monomers such as 4-vinylcyclopentene and 2-methyl-4-isopropenylcyclopentene, and vinylcyclopentane based monomers such as 4-vinylcyclopentane and 4-isopropenylcyclopentane; vinylcyclohexene based monomers such as 4-vinylcyclohexene, 4-isopropenylcyclohexene, 1-methyl-4-isopropenylcyclohexene, 2-methyl-4-vinylcyclohexene, and 2-methyl-4-isopropenylcyclohexene; vinylcyclohexane based monomers such as 4-vinylcyclohexane and 2-methyl-4-isopropenylcyclohexane; styrene based monomers such as styrene, α-methylstyrene, 2-methylstyrene, 3-methylstyrene, 4-methylstyrene, 1-vinylnaphthalene, 2-vinylnaphthalene, 4-phenylstyrene, and p-methoxystyrene; terpene based monomers such as d-terpene, 1-terpene, diterpene, d-limonene, 1-limonene, and dipentene; vinylcycloheptene based monomers such as 4-vinylcycloheptene and 4-isopropenylcycloheptene; and vinylcycloheptane based monomers such as 4-vinylcycloheptane and 4-isopropenylcycloheptane. Of these, styrene and α-methylstyrene are preferable. These can be used singly or in combinations of two or more kinds thereof.

<Cyclopentadiene based monomer>

Examples of the cyclopentadiene based monomer which is used as the monomer of the addition type (co) polymer (6) of the invention include cyclopentadiene, 1-methylcyclopentadiene, 2-methylcyclopentadiene, 2-ethylcyclopentadiene, 5-methylcyclopentadiene, 5,5-methylcyclopentadiene, and dicyclopentadiene. Of these, cyclopentadiene and dicyclopentadiene are preferable. These can be used singly or in combinations of two or more kinds thereof.

The foregoing addition type (co)polymer of at least one monomer selected from a specific monomer, a vinyl based cyclic hydrocarbon based monomer and a cyclopentadiene based monomer can be obtained in the same addition polymerization method as in the foregoing saturated copolymer (5) of a specific monomer and an unsaturated double bond-containing compound.

Also, the hydrogenated (co)polymer of the foregoing addition type (co)polymer can be obtained in the same hydrogenation method as in the foregoing hydrogenated (co)polymer of the ring-opening (co)polymer (3).

The cyclic olefin based resin which is used in the invention has a molecular weight of preferably from 0.2 to 5 dl/g, more preferably from 0.3 to 3 dl/g, and especially preferably from 0.4 to 1.5 dl/g in terms of an inherent viscosity $[\eta]_{inh}$; and has a number average molecular weight (Mn) of preferably from 8,000 to 300,000, more preferably of from 10,000 to 100,000, and especially preferably from 12,000 to 80,000 and a weight average molecular weight (Mw) of preferably from 20,000 to 500,000, more preferably from 30,000 to 350,000, and especially preferably from 40,000 to 250,000, as reduced into polystyrene measured by the gel permeation chromatography (GPC).

By making the inherent viscosity $[\eta]_{inh}$ or weight average molecular weight fall within the foregoing range, a balance between the molding processability, heat resistance, water resistance, chemical resistance and mechanical characteristics and the stability of a retardation when used as the wavelength plate of the invention becomes well.

A saturated water absorption of the thus obtained ring-opening polymer or hydrogenated material is preferably in the range of from 0.05 to 2 % by weight, and more preferably from 0.1 to 1 % by weight at 23 °C. When the saturated water absorption falls within this range, the retardation is uniform; the adhesion of the resulting cyclic olefin based resin film to the anisotropic crystal plate or the like is excellent so that peeling is not generated in the way of use; and the compatibility with an antioxidant, etc. is excellent so that it can be added in a large amount. Incidentally, the foregoing saturated water absorption is a value obtained by measuring an increased weight after dipping in water at 23 °C for one week according to ASTM D570.

When the saturated water absorption is less than 0.05 % by weight, the adhesion to the anisotropic crystal plate or the transparent support or the like becomes poor, and peeling is likely generated. On the other hand, when it exceeds 2 % by weight, the cyclic olefin based resin film is liable to cause a dimensional change due to the absorption of water.

In the invention, a cyclic olefin based resin having a photoelastic coefficient ($C_P$) of from 0 to 100 ($\times 10^{-12}$ $Pa^{-1}$) and a stress-optical coeffcient ($C_R$) of from 1,500 to 4,000 ($\times 10^{-12}$ $Pa^{-1}$) is suitably used.

The photoelastic coefficient ($C_P$) and stress-optical coefficient ($C_R$) are described in various documents *(Polymer Journal,* Vol. 27, No. 9, pp. 943-950 (1995); *Nihon Reoroji Gakkaishi* (Journal of the Society of Rheology, Japan), Vo. 19, No. 2, pp. 93-97 (1991); and *Hikaridansei Jikkenho* (Photoelasticity Experimental Methods), The Nikkankogyo Shimbun, Ltd., 1975, 7th Ed.). The former expresses a degree of generation of a retardation due to the stress in the glass state of the polymer, and the latter expresses a degree of generation of a retardation due to the stress in the fluidized state.

What the photoelastic coefficient ($C_P$) is large means that in the case where the polymer is used in the glass state, a retardation is likely generated sensitively due to an external factor or a stress generated from a strain when it is frozen itself. For example, it is meant that an unnecessary change of retardation is likely generated due to a residual strain at the time of sticking in laminating, or a fine stress generated by shrinkage of the material caused by a temperature change or a humidity change as in the invention. From this matter, it is preferable that the photoelastic coefficient ($C_P$) is as small as possible.

On the other hand, what the stress-optical coefficient ($C_R$) is large brings such advantages that a desired retardation is obtained at a low stretching magnification during imparting revealing properties of retardation to the cyclic olefin based resin film; that a retardation film capable of imparting a large retardation is likely obtained; and that in the case where the same retardation is desired, the film can be made thin as compared with those having a small stress-optical coefficient ($C_R$).

From the foregoing standpoints, the photoelastic coefficient ($C_P$) is usually from 0 to 100 ($\times 10^{-12}$ $Pa^{-1}$), preferably from 0 to 80 ($\times 10^{-12}$ $Pa^{-1}$), more preferably from 0 to 50 ($\times 10^{-12}$ $Pa^{-1}$), especially preferably from 0 to 30 ($\times 10^{-12}$ $Pa^{-1}$), and especially preferably from 0 to 20 ($\times 10^{-12}$ $Pa^{-1}$). The case where the photoelastic coefficient exceeds 100 ($\times 10^{-12}$ $Pa^{-1}$) is not preferable because in the laminated wavelength plate to be used in the invention, a deviation from the tolerable error range of an optimum sticking optical axis angle is generated due to a stress as generated at the time of sticking or a change of retardation as generated by the environmental change during the use, or the like, resulting in a lowering of the quantity of transmitted light when used as the wavelength plate.

Also, the stress-optical coefficient ($C_R$) is preferably from 1,500 to 4,000 ($\times 10^{-12}$ $Pa^{-1}$), more preferably from 1,700 to 4,000 ($\times 10^{-12}$ $Pa^{-1}$), and especially preferably from 2,000 to 4,000 ($\times 10^{-12}$ $Pa^{-1}$). When the stress-optical coefficient ($C_R$) is less than 1,500 ($\times 10^{-12}$ $Pa^{-1}$), unevenness of a retardation is likely generated at the time of stretching during revealing a desired retardation. On the other hand, when it exceeds 4,000 ($\times 10^{-12}$ $Pa^{-1}$), there is some possibility that a problem occurs such that it becomes difficult to control the stretching magnification at the time of stretching.

When the cyclic olefin based resin to be used in the invention is formed into a 25 μm-thick film under conditions at 40 °C and 90 % RH, its water vapor permeability is usually from 1 to 400 $g/m^2 \cdot 24$ hr, preferably from 5 to 350 $g/m^2 \cdot 24$ hr, and more preferably from 10 to 300 $g/m^2 \cdot 24$ hr. What the water vapor permeability is made to fall within this range is preferable because it is possible to reduce or avoid a change of the characteristics due to the water content of a tackifier or an adhesive to be used for sticking the retardation film to the anisotropic crystal plate, or the humidity of the environment where the wavelength plate is used.

As described previously, though the cyclic olefin based resin which is used in the invention is constructed of the ring-opening (co)copolymer (1) or (2), the hydrogenated (co)polymer (3) or (4), the saturated copolymer (5), or the addition type (co)polymer (6), it can be more stabilized by adding known antioxidants and ultraviolet absorbers and the like thereto. Also, for the sake of improving the processability, additives which are used in the conventional resin processing, such as lubricants, can be added.

A glass transition temperature (Tg) of the cyclic olefin based resin which is used in the invention is preferably from 110 to 350 °C, more preferably from 115 to 250 °C, and especially preferably from 120 to 200 °C. What the Tg is lower than 110 °C is not preferable because when formed as a wavelength plate, a change of the characteristics becomes large due to heat from a laser beam source or its adjacent parts. On the other hand, what the Tg exceeds 350 °C is not preferable because in the case of processing by heating in the vicinity of Tg by stretching processing or the like, the possibility that the resin causes thermal degradation becomes high.

The cyclic olefin based resin film which is used for the wavelength plate of the invention can be obtained by forming the foregoing cyclic olefin based resin into a film or sheet by the melt molding method or solution casting method (solvent casting method) or the like. Above all, the solvent casting method is preferable from the standpoints of uniform film thickness and good surface smoothness.

A method for obtaining the cyclic olefin based resin film by the solvent casting method is not particularly limited, and known methods may be employed. For example, there is enumerated a method in which the cyclic olefin based resin of the invention is dissolved or dispersed in a solvent to form a solution having an appropriate concentration, the solution is poured or coated on a suitable carrier, and after drying, the film is peeled apart from the carrier.

Various conditions for the method for obtaining the cyclic olefin based resin film by the solvent casting method will be given below, but it should not be construed that the invention is limited to these various conditions.

In dissolving or dispersing the cyclic olefin based resin in a solvent, the concentration of the resin is usually from 0.1 to 90 % by weight, preferably from 1 to 50 % by weight, and more preferably from 10 to 35 % by weight. When the concentration of the resin is less than the foregoing range, there is some possibility that problems occur such that it becomes difficult to secure the thickness of the film and that it becomes difficult to obtain surface smoothness of the film by expansion caused due to evaporation of the solvent, or the like. On the other hand, what it exceeds the foregoing range is not preferable because the solution viscosity becomes too high, thereby possibly causing a problem in uniformity of the thickness or surface smoothness of the resulting cyclic olefin based resin film.

Incidentally, the viscosity of the foregoing solution at room temperature is usually from 1 to 1,000,000 mPa·s, preferably from 10 to 100,000 mPa·s, more preferably from 100 to 50,000 mPa·s, and especially preferably from 1,000 to 40,000 mPa·s.

Examples of the solvent to be used include aromatic solvents such as benzene, toluene, and xylene; cellosolve based solvents such as methyl cellosolve, ethyl cellosolve, and 1-methoxy-2-propanol; ketone based solvents such as diacetone alcohol, acetone, cyclohexanone, methyl ethyl ketone, and 4-methyl-2-pentanone; ester based solvents such as methyl lactate and ethyl lactate; cycloolefin based solvents such as cyclohexanone, ethylcyclohexanone, and 1,2-dimethylcyclohexanone; halogen-containing solvents such as 2,2,3,3-tetrafluoro-1-propanol, methylene chloride, and chloroform; ether based solvents such as tetrahydrofuran and dioxane; and alcohol based solvents such as 1-pentanol and 1-butanol.

Besides the foregoing, by using a solvent having an SP value (solubility parameter) in the range of usually from 10 to 30 ($MPa^{1/2}$), preferably from 10 to 25 ($MPa^{1/2}$), more preferably from 15 to 25 ($MPa^{1/2}$), and especially preferably from 15 to 20 ($MPa^{1/2}$), it is possible to obtain a cyclic olefin based resin film having good surface uniformity and optical characteristics.

The foregoing solvents can be used singly or in admixture of plural kinds thereof In that case, it is preferable that in the mixed system, the range of the SP value falls within the foregoing range. At this time, the SP value of the mixed system can be expected by a weight ratio. For example, in the mixture of two kinds, when the weight fraction is defined as W1 and W2, respectively, and the SP value is defined as SP1 and SP2, respectively, the SP value of the mixed system can be determined as a value as calculated according to the following expression.

$$(\text{SP value}) = W1 \cdot SP1 + W2 \cdot SP2$$

As a method for producing the cyclic olefin based resin film by the solvent casting method, there is generally enumerated a method in which the foregoing solution is coated on a substrate such as a metal drum, a steel belt, a polyester film such as polyethylene terephthalate (PET) and polyethylene naphthalate (PEN), and a polytetrafluoroethylene (a trade name: TEFLON) belt by using a die or a coater, the solvent is subsequently dried, and the film is then peeled apart from the substrate. Also, the cyclic olefin based resin film can be produced by coating the solution on a substrate by spraying, brushing, roll spin coating, dipping, etc., subsequently drying the solvent, and then peeling apart the film from the substrate. Incidentally, the thickness or surface smoothness or the like may be controlled by repeated coating.

The drying step of the foregoing solvent casting method is not particularly limited and can be carried out by a generally employed method, for example, a method for passing in a drying furnace via the plural number of rolls. However, in the drying step, when following evaporation of the solvent, air bubbles are generated, the characteristics of the film are remarkably lowered. Accordingly, for the purpose of avoiding this matter, it is preferable that the drying step is divided into plural steps of two stages or more, thereby controlling the temperature or air flow in each step.

Also, the amount of the residual solvent in the cyclic olefin based resin film is usually not more than 10 % by weight, preferably not more than 5 % by weight, more preferably not more than 1 % by weight, and especially preferably not more than 0.5 % by weight. Here, what the amount of the residual solvent exceeds 10 % by weight is not preferable because in the actual use, a dimensional change with time may possibly become large. Also, such is not preferable because the Tg becomes low due to the residual solvent, whereby the heat resistance may be possibly lowered.

Incidentally, for the purpose of suitably performing a stretching step as described later, there may be the case where the foregoing amount of the residual solvent must be properly adjusted within the foregoing range. Concretely, in order to reveal the retardation at the time of stretching and orientation uniformly and stably, there may be the case where the amount of the residual solvent is usually adjusted at from 10 to 0.1 % by weight, preferably from 5 to 0.1 % by weight, and more preferably from 1 to 0.1 % by weight.

By making a trace amount of the solvent remain, there may be the case where the stretching processing becomes easy, or it becomes easy to control the retardation.

A thickness of the cyclic olefin based resin film of the invention is usually from 0.1 to 500 μm, preferably from 0.1 to 300 μm, and more preferably from 1 to 300 μm. When the thickness is less than 0.1 μm, handling becomes substantially difficult. On the other hand, what it exceeds 500 μm is not preferable because not only it is difficult to wind

up the film in the rolled shape, but also the transmittance may be possibly lowered as the wavelength plate of the invention which is required to have a high light transmittance.

A thickness distribution of the cyclic olefin based resin film of the invention is usually within ±20 %, preferably ±10 %, more preferably ±5%, and especially preferably ±3% against the mean value. Also, it is desirable that a fluctuation of the thickness per 1 cm is usually not more than 10 %, preferably not more than 5 %, more preferably not more than 1 %, and especially preferably not more than 0.5 %. What such a thickness control is performed is preferable because not only it is possible to prevent an unevenness of the retardation in stretching and orientation, but also the aberration characteristics become well when formed into a laminated wavelength plate.

In the laminated wavelength plate of the invention, one prepared by subjecting the cyclic olefin based resin film obtained by the foregoing method to stretching processing is suitably used. Concretely, such a retardation film can be produced by a known uniaxial stretching method or biaxial stretching method. That is, a horizontal uniaxial stretching method by the tenter method, an inter-roll compression stretching method, a vertical uniaxial stretching method utilizing rolls having a different peripheral speed, a biaxial stretching method composed of a combination of horizontal uniaxial stretching and vertical uniaxial stretching, a stretching method by the inflation method, and the like can be employed.

In the case of the uniaxial stretching method, the stretching rate is usually from 1 to 5,000 %/min, preferably from 50 to 1,000 %/min, further preferably from 100 to 1,000 %/min, and especially preferably from 100 to 500 %/min.

The case of the biaxial stretching method includes the case where the stretching is carried out at the same time in the two directions and the case where after uniaxial stretching, a stretching treatment is carried out in the direction different from the first stretching direction. In these cases, an intersecting angle of the two stretching axes is usually in the range of from 120 to 60 degrees. Also, the stretching rate may be identical or different in the respective stretching directions; and it is usually from 1 to 5,000 %/min, preferably from 50 to 1,000 %/min, more preferably from 100 to 1,000 %/min, and especially preferably from 100 to 500 %/min.

Though the stretching processing temperature is not particularly limited, it is usually in the range of (Tg ± 30 °C), preferably (Tg ± 10 °C), and more preferably from (Tg - 5 °C) to (Tg + 10 °C) on the basis of the glass transition temperature (Tg) of the cyclic olefin based resin of the invention. By making the stretching processing temperature fall within the foregoing range, not only it becomes possible to suppress the generation of an unevenness of the retardation, but also it becomes easy to control an index ellipsoid, and therefore, such is preferable.

The stretching magnification is determined by the desired characteristics and therefore, is not particularly limited. However, it is usually from 1.01 to 10 times, preferably from 1.1 to 5 times, and more preferably from 1.1 to 3 times. When the stretching magnification exceeds 10 times, there is some possibility that control of the retardation becomes difficult.

Though the stretched film may be cooled as it is, it is preferable that the stretched film is allowed to stand in the temperature atmosphere at from (Tg - 20 °C) to Tg for preferably at least 10 seconds, more preferably from 30 seconds to 60 minutes, and especially preferably from one minute to 60 minutes. In this way, a retardation film which is little in a change of retardation characteristics with time and stable is obtained.

Also, a linear expansion coefficient of the cyclic olefin based resin film of the invention is preferably $1 \times 10^{-4}$ (1/°C) or lower, more preferably $9 \times 10^{-5}$ (1/°C) or lower, especially preferably $8 \times 10^{-5}$ (1/°C) or lower, and most preferably $7 \times 10^{-5}$ (1/°C) or lower at a temperature in the range of from 20 °C to 100 °C. Also, in the case where the cyclic olefin based resin film is stretched, a difference of the linear expansion coefficient between the stretching direction and the vertical direction thereto is preferably $5 \times 10^{-5}$ (1/°C) or lower, more preferably $3 \times 10^{-5}$ (1/°C) or lower, and especially preferably $1 \times 10^{-5}$ (1/°C) or lower. By making the linear expansion coefficient fall within the foregoing range, when the cyclic olefin based resin film of the invention is laminated to form the wavelength plate of the invention, a change of the retardation which is brought by a change of the stress caused due to influences such as temperature and humidity at the time of use is suppressed, whereby stability of the characteristics over a long period of time can be obtained when used as the wavelength plate of the invention.

In the thus stretched film, the molecule is oriented by stretching, thereby giving a retardation to the transmitted light. This retardation can be controlled by a retardation value of the film before stretching, stretching magnification, stretching temperature, and thickness of the film after stretching and orientation. Here, the retardation is defined by the product (Δnd) of a refractive index difference of birefringent light (Δn) and a thickness (d).

In the case where the film before stretching has a constant thickness, when the stretching magnification of the film is large, an absolute value of the retardation tends to become large. Accordingly, by changing the stretching magnification, it is possible to obtain a retardation film having a desired retardation value.

With respect to the retardation of the cyclic olefin based resin film which is used in the invention, what a value of the following expression (a) takes a value of usually [(0.2 to 0.3) + X], preferably [(0.22 to 0.28) + X], and more preferably [(0.24 to 0.26) + X], or usually [(0.40 to 0.55) + Y], preferably [(0.43 to 0.55) + Y], and more preferably [(0.45 to 0.55) + Y] against light having an arbitrary wavelength falling within the wavelength range of from 400 to 800 nm is preferable because it is easy to control the retardation of the laminated wavelength plate of the invention. Incidentally, the foregoing X represents 0 or the number of an integral multiple of 0.5; and Y represents 0 or an integer of 1 or more.

From the viewpoint of easiness of the film production, it is preferable that X is 0 or 0.5 and Y is 0 or 1.

$$Re(\lambda)/\lambda \quad (a)$$

[In the expression, Re(λ) represents a retardation value in terms of nm against light having a wavelength of λ.]

It is preferable that the cyclic olefin based resin film which is used in the invention is little in wavelength dependency of retardation. Concretely, a value of a ratio of a retardation against light having a wavelength of 800 nm (Re800) to a retardation against light having a wavelength of 550 nm (Re550) (Re800/Re550) is preferably from 0.85 to 1.10, more preferably from 0.90 to 1.05, and especially preferably from 0.95 to 1.00. In the case where the wavelength dependency of retardation falls outside the foregoing range, there is some possibility that the same polarizing characteristics against monochromic lights having a different wavelength, that is, a function as a quarter wavelength plate or a function as a half wavelength plate, do not reveal sufficiently.

As the crystal plate having optical anisotropy which is used in the invention, ones prepared by processing a single crystal such as mica, quartz, rock crystal, calcite, $LiNbO_3$, and $LiTaO_3$ into a plate-like form are suitable. Above all, rock crystal is preferably used in view of processability and processing costs, and artificial rock crystal is especially preferably used. Also, in processing the rock crystal, the cut-out plane is not particularly limited, and ones prepared by cutting out at an arbitrary angle with an optical axis (Z axis) of the rock crystal being a rotation axis may be used depending upon the purpose. Concretely, plates such as AT cut plates, BT cut plates, FC cut plates, IT cut plates, LC cut plates, SC cut plates, and RT cut plates are preferably used.

A thickness of the crystal plate having optical anisotropy which is used in the invention is properly chosen depending upon the desired characteristics and characteristics of raw materials and is not particularly limited. It is usually from 10 to 2,000 μm. Further, a retardation of the crystal plate having optical anisotropy is usually from 50 to 10,000 nm.

The laminated wavelength plate of the invention is a laminate as prepared such that an angle defined by the respective optical axes of the foregoing cyclic olefin based resin film and crystal plate having optical anisotropy is usually in the range of from 0 to 90 degrees, preferably from 1 to 89 degrees, and more preferably from 2 to 88 degrees. In this way, it is possible to obtain the wavelength plate of the invention which can arbitrarily control retardation against specific lights over a broad range, exhibits a prescribed retardation in a broad wavelength region, and is extremely little in a change of characteristics against the environmental condition such as heat and humidity.

When the retardation of the foregoing cyclic olefin based resin film and the retardation of the anisotropic crystal plate, both of which are used in the laminated wavelength plate of the invention, are defined as α and β, respectively, a ratio of the respective retardations (β/α) is preferably from 0.01 to 100, more preferably from 0.1 to 10, and especially preferably from 0.5 to 8. By making the foregoing ratio of retardations fall within the foregoing range, it is possible to control the retardation simply and precisely.

In order that the laminated wavelength plate of the invention may function as a quarter wavelength plate in plural lights having a different wavelength falling within the wavelength range of from 400 to 800 nm, a value expressed by the following expression (a) must be [(0.20 to 0.30) + X], preferably [(0.22 to 0.28) + X], and more preferably [(0.24 to 0.26) + X] in the wavelength of the corresponding light. Incidentally, the foregoing X represents 0 or the number of an integral multiple of 0.5, but the case of X = 0 is preferable in view of easiness of the production.

$$Re(\lambda)/\lambda \quad (a)$$

[In the expression, Re(λ) represents a retardation value in terms of nm against light having a wavelength of λ.]

When the value within the parenthesis of the expression [(0.20 to 0.30) + X] which represents the value of the foregoing expression (a) is closed to 0.25, outgoing linearly polarized light against incident linearly polarized light becomes closed to circularly polarized light, and therefore, such is preferable. When this value is a value less than 0.20 or a value exceeding 0.30, the function as a quarter wavelength plate is lowered so that the outgoing light is largely deviated from the circularly polarized light and becomes elliptically polarized light. Thus, when used in an optical information recording and reproducing device, the reading precision becomes worse, and therefore, such is not preferable.

In order that the laminated wavelength plate of the invention may function as a quarter wavelength plate in plural laser beams having a different wavelength falling within the wavelength range of from 400 to 800 nm, a value expressed by the following expression (a) must be [(0.20 to 0.30) + X], preferably [(0.22 to 0.28) + X], and more preferably [(0.24 to 0.26) + X] in the wavelength of the corresponding laser beam. Incidentally, the foregoing X represents 0 or the number of an integral multiple of 0.5, but the case of X = 0 is preferable in view of easiness of the production.

$$Re(\lambda)/\lambda \quad (a)$$

[In the expression, Re(λ) represents a retardation value in terms of nm against light having a wavelength of λ.]

When the value within the parenthesis of the expression [(0.20 to 0.30) + X] which represents the value of the foregoing expression (a) is closed to 0.25, outgoing linearly polarized light against incident linearly polarized light becomes closed to circularly polarized light, and therefore, such is preferable. When this value is a value less than 0.20 or a value exceeding 0.30, the function as a quarter wavelength plate is lowered so that the outgoing light is largely deviated from the circularly polarized light and becomes elliptically polarized light. Thus, when used in an optical information recording and reproducing device, the reading precision becomes worse, and therefore, such is not preferable.

Also, in order that the laminated wavelength plate of the invention may function as a half wavelength plate in plural lights having a different wavelength falling within the wavelength range of from 400 to 800 nm, a value expressed by the following expression (a) must be [(0.40 to 0.55) + Y], preferably [(0.43 to 0.55) + Y], and more preferably [(0.45 to 0.55) + Y] in the wavelength of the corresponding light. Incidentally, the foregoing Y represents 0 or an integer of 1 or more, but the case of Y = 0 is preferable in view of easiness of the production.

When the value within the parenthesis of the expression [(0.40 to 0.55) + Y] which represents the value of the foregoing expression (a) is closed to 0.5, conversion efficiency of outgoing linearly polarized light against incident linearly polarized light becomes high, and therefore, such is preferable. When this value is a value less than 0.4 or a value exceeding 0.55, the conversion efficiency of the outgoing light is lowered.

Further, it is possible to design the laminated wavelength plate of the invention such that it functions as a quarter wavelength plate against light having a certain wavelength and as a half wavelength plate against having other wavelength in plural lights having a different wavelength falling within the wavelength range of from 400 to 800 nm. In order to obtain a composite wavelength plate function, the retardation of each of the cyclic olefin based resin film and the transparent crystal plate having optical anisotropy to be used and the angle defined by the respective optical axes during sticking are adjusted.

Though the laminated wavelength plate of the invention is obtained by bonding the cyclic olefin based resin film to the transparent crystal plate having optical anisotropy, the number of sheets to be laminated is not particularly limited. However, when the number of sheets to be laminated is too large, the bonding step increases, and the production costs become high. Therefore, the number of sheets to be laminated is preferable from 2 to 15, more preferably from 2 to 10, and especially preferably from 2 to 5.

Further, the direction of incidence of light is not particularly limited, but in any case where the light is made incident from any plane, it is possible to design a laminated wavelength plate having required optical characteristics.

Incidentally, a transparent substrate may be further laminated on one surface or both surfaces of the laminated wavelength plate of the invention. In this case, though one made of an organic material and/or an inorganic material can be used as the transparent substrate, the case where the transparent substrate is made of an inorganic material is preferable. A glass is especially preferable in view of long-term stability as a wavelength plate as well as optical characteristics such that it is free from birefringence and excellent in transparency.

Moreover, the laminated wavelength plate of the invention can be further bonded to another laminated wavelength plate of the invention and then provided for use.

In the invention, as a tackifier or adhesive for bonding and fixing the cyclic olefin based resin film to the anisotropic crystal plate or transparent substrate, known materials can be used so far as they are useful for optical use. Specific examples thereof include natural rubber based, synthetic rubber based, vinyl acetate/vinyl chloride copolymer based, polyvinyl ether based, acrylic or modified polyolefin based tackifiers; curable adhesives resulting from adding a curing agent such as isocyanates to the foregoing tackifier; dry laminating adhesives comprising a mixture of a polyurethane based resin solution and a polyisocyanate based resin solution; synthetic rubber based adhesives; epoxy based adhesives; and acrylic adhesives. Also, when classified in terms of the form, the adhesive or tackifier may be of any form of a solvent type, an aqueous dispersion type, or a solvent-free type; and when classified in terms of the curing method, there are enumerated known tackifiers or adhesives such as a two-pack mixture thermosetting type, a one-pack thermosetting type, a solvent drying type, and a radiation curable type by ultraviolet light, etc. Of these, acrylic ultraviolet light-curable type adhesives are preferable; and solvent-free types are especially preferable because an unevenness of the retardation is hardly generated.

One surface or both surfaces of the laminated wavelength plate of the invention or the transparent substrate as laminated thereon may be subjected to an antireflection treatment. For the purpose of imparting an antireflection ability, as a method for forming an antireflection film, there is enumerated a known method in which a transparent film of a metal oxide is provided by, for example, vapor deposition or sputtering. As the thus provided antireflection layer, a multilayered film of such a metal oxide is preferable because a low reflectance is obtained over a wide wavelength region.

Also, there is enumerated a method in which a transparent organic material having a reflectance lower than that of the retardation film or transparent substrate, such as fluorine based copolymers, is dissolved in an organic solvent, and the solution is coated on the wavelength plate or transparent substrate as laminated thereon using a bar coater, a spin coater, or a gravure coater, heated and dried (cured), thereby providing an antireflection layer. Incidentally, in that case, when a transparent material layer having a refractive index higher than that of the retardation film or transparent substrate is provided between the subject antireflection layer and the retardation film or transparent substrate, the reflectance can be more reduced.

Also, an in-plane aberration of the wavelength plate of the invention is preferably within 30 (mλ), more preferably within 20 (mλ), especially preferably within 10 (mλ), and most preferably within 5 (mλ). By making the in-plane aberration of the wavelength plate fall within the foregoing range, a good S/N and a tolerable jitter range are obtained, and therefore, such is preferable. Here, λ represents a wavelength of monochromic light.

Also, it is preferable that the number of foreign matters in the wavelength plate of the invention is as small as possible. The number of foreign matters having a mean particle size of 10 μm or more is usually $10/mm^2$ or lower, preferably $5/mm^2$ or lower, and more preferably $1/mm^2$ or lower. When foreign matters of 10 μm or more are present in the number exceeding $10/mm^2$ in the wavelength plate, a noise signal becomes large and the S/N ratio becomes small, and therefore, such is not preferable. Here, the foreign matters in the wavelength plate include ones capable of lowering transmission of light and ones capable of largely changing the advance direction of light due to the presence of these foreign matters. Examples of the former include dusts or dirt, resin scorches or metal powders, and powders of minerals, etc.; and examples of the latter include contaminants of other resins and transparent substances having a different refractive index.

Incidentally, for the purpose of shielding or lowering transmission of light other than one having a desired wavelength according to the need such as a reduction of noise, the laminated wavelength plate of the invention may be colored with a known coloring agent, etc.

Not only the laminated wavelength plate of the invention is a broadband wavelength plate (retardation plate), but also the retardation film is directly bonded and fixed to the transparent crystal plate having optical anisotropy or the transparent substrate. Therefore, its characteristics are not substantially changed by the environment such as heat and humidity so that the laminated wavelength plate of the invention can exhibit a stable performance over a long period of time. Accordingly, by using such a wavelength plate, it is possible to produce an optical information recording and reproducing device with high performance which is cheap and excellent in long-term reliability and can cope with optical systems corresponding to plural wavelengths.

Incidentally, since the optical information recording and reproducing device using the laminated wavelength plate of the invention can cope with plural wavelengths, it is possible to achieve a design corresponding to various modes such as CD-ROM, CD-R, DVD-ROM, DVD-RAM, and MO. That is, with respect to the recording and reproduction of information such as voices, images and computer programs, it is possible to achieve a design such that a single device can be applied to any of a reproduction-only recording medium, a write-once type recording medium, and a rewritable type recording medium. Such an optical information recording and reproducing device can be used for OA instruments, acoustic recording and reproducing devices, image recording and reproducing devices, computer data recording and reproducing devices, game machines, and the like.

## EXAMPLES

The invention will be more specifically described below with reference to the Examples, but it should not be construed that the invention is limited to these Examples. Incidentally, in the Examples, all parts and percentages mean parts by weight and % by weight, respectively unless otherwise indicated. Also, various measurements in the Examples are as follows.

### Inherent viscosity ($[\eta]_{inh}$)

The inherent viscosity was measured by an Ubbelohde's viscometer by using chloroform or cyclohexane as a solvent under conditions at a polymer concentration of 0.5 g/dl and 30 °C.

### Gel content

50 g of a hydrogenated (co)polymer was dissolved in chloroform at a temperature of 25 °C such that the concentration became 1 %; this solution was filtered using a membrane filter having a pore size of 0.5 μm, the weight of which had been previously measured (manufactured by Advantec Toyo Kaisha, Ltd.); the filter after filtration was dried; and the gel content was calculated from an increase of its weight.

Rate of hydrogenation

In the case of a hydrogenated homopolymer, $^1$H-NMR was measured at 500 MHz, and the rate of hydrogenation was measured from a ratio of absorption intensity between methyl hydrogen of the ester group and olefin-based hydrogen, or a ratio of absorption intensity between paraffin-based hydrogen and olefin-based hydrogen. Also, in the case of a hydrogenated copolymer, the $^1$H-NMR absorption of the copolymer after polymerization and that of the hydrogenated copolymer after hydrogenation were compared, thereby calculating the rate of hydrogenation.

Glass transition temperature

The glass transition temperature was measured at a temperature-rise rate of 10°C/min in a nitrogen atmosphere by a scanning colorimeter (DSC).

Film thickness

The film thickness was measured using a laser focal displacement meter, LT-8010, manufactured by Keyence Corporation.

Retardation

The retardation was measured at a wavelength of 480, 550, 590, 630 and 750 nm, respectively using KOBRA-21ADH, manufactured by Oji Scientific Instruments, and with respect to other portions than the foregoing wavelengths, the retardation value was calculated according to the Cauchy dispersion equation using the retardation values at the foregoing wavelengths.

<Synthesis Example 1>

In a reactor which had been purged with nitrogen, 250 parts of 8-methyl-8-methoxycarbonyltetracyclo [4.4.0.$1^{2,5}$.$1^{7,10}$]-3-dodecene (specific monomer), 27 parts of 1-hexene (molecular weight modifier), and 750 parts of toluene (solvent for ring-opening polymerization reaction) were charged, and this solution was heated at 60°C. Next, 0.62 parts of a toluene solution of triethylaluminum (1.5 moles/L) as a polymerization catalyst and 3.7 parts of a toluene solution (concentration: 0.05 moles/L) of tungsten hexachloride having been modified with t-butanol and methanol (t-butanol/methanol/tungsten = 0.35/0.3/1 by mole) were added to the solution in the reactor, and this system was subjected to ring-opening polymerization reaction by heating and stirring at 80 °C for 3 hours, thereby obtaining a ring-opening polymer solution. In this polymerization system, the polymerization conversion was 97 %, and the resulting ring-opening polymer had an inherent viscosity ($[\eta]_{inh}$), as measured in chloroform at 30 °C, of 0.62 dl/g.

In an autoclave, 4,000 parts of the thus obtained ring-opening polymer solution was charged, 0.48 parts of $RuHCl(CO)[P(C_6H_5)_3]_3$ was added to this ring-opening polymer solution, and the mixture was subjected to hydrogenation reaction by heating and stirring for 3 hours under conditions at a hydrogen gas pressure of 100 kg/cm$^2$ and a reaction temperature of 165 °C.

After cooling the resulting reaction solution (hydrogenated polymer solution), the pressure of the hydrogen gas was released. This reaction solution was poured into a large amount of methanol, and a solidified material was separated and recovered, and then dried, thereby obtaining a hydrogenated polymer. This is designated as a resin A.

The rate of hydrogenation of the thus obtained hydrogenated polymer was measured using $^1$H-NMR and found to be 99.9 %. Also, the glass transition temperature (Tg) of the subject resin was measured by the DSC method and found to be 165 °C. Also, the subject resin was measured for a number average molecular weight (Mn) and a weight average molecular weight (Mw) as reduced into polystyrene by the GPC method (solvent: tetrahydrofuran). As a result, the number average molecular weight (Mn) was 42,000; the weight average molecular weight (Mw) was 180,000; and the molecular weight distribution (Mw/Mn) was 4.29. Also, the saturated water absorption at 23 °C of the subject resin was measured and found to be 0.3 %. Also, the SP value was measured and found to be 19 (MPa$^{1/2}$). Also, the inherent viscosity ($[\eta]_{inh}$) in chloroform at 30 °C of the subject resin was measured and found to be 0.67 dL/g. Also, the gel content was 0.4 %.

<Synthesis Example 2>

A hydrogenated polymer was obtained in the same manner as in Synthesis Example 1, except that 225 parts of 8-methyl-8-methoxycarbonyltetracyclo[4.4.0.$1^{2,5}$.$1^{7,10}$]-3-dodecene and 25 parts of bicyclo[2.2.1]hept-2-ene were used as specific monomers and that the addition amount of 1-hexene (molecular weight modifier) was changed to 43

parts. The resulting hydrogenated polymer (hereinafter designated as "resin B") had a rate of hydrogenation of 99.9 %.

<Synthesis Example 3>

A hydrogenated polymer was obtained in the same manner as in Synthesis Example 1, except that 215 parts of 8-methyl-8-methoxycarbonyltetracyclo[4.4.0.1.$^{2,5}$.1$^{7,10}$]-3-dodecene and 35 parts of bicyclo[2.2.1]hept-2-ene were used as specific monomers and that the addition amount of 1-hexene (molecular weight modifier) was changed to 18 parts. The resulting hydrogenated polymer (hereinafter designated as "resin C") had a rate of hydrogenation of 99.9 %.

<Film Production Example 1>

The resin A obtained in Synthesis Example 1 was dissolved in toluene in a concentration of 30 % (solution viscosity at room temperature: 30,000 mPa·S), and the solution was coated on a 100 µm-thick PET film [LUMILAR U94, manufactured by Toray Industries, Inc.] the surface of which had been made hydrophilic (easily adhesive) with an acrylic material using an INVEX labcoater, manufactured by Inoue Kinzoku Kogyo Co., Ltd. such that the film thickness after drying was 100 µm, followed by primary drying at 50 °C and then secondary drying at 90 °C.

There was thus obtained a resin film A peeled apart from the PET film. The resulting film had an amount of the residual solvent of 0.5 %.

This film was determined for a photoelastic coefficient ($C_P$) and a stress-optical coefficient ($C_R$) in the following manners. Concretely, with respect to the photoelastic coefficient ($C_P$), after applying a rectangular sample with several kinds of constant loads at room temperature (25 °C), it was calculated from a generated retardation and a stress which the sample received at that time. With respect to the stress-optical coefficient ($C_R$), after applying a film-like sample with several kinds of constant loads at the Tg or higher and gradually cooling to return to room temperature in the elongated state by several percents, it was calculated from a generated retardation and a stress as applied. As a result, the $C_P$ and the $C_R$ were 4 ($\times 10^{-12}$ $Pa^{-1}$) and 1,750 ($\times 10^{-12}$ $Pa^{-1}$), respectively.

In a tenter, this resin film A was heated at 170 °C which is (Tg + 5 °C), stretched at a stretching rate of 400 %/min and a stretching magnification of 1.3 times, cooled in an atmosphere at 110 °C for about 2 minute while keeping this state, further cooled to room temperature, and then taken out. As a result, a retardation film A-1 having a retardation of 135 nm at a wavelength of 550 nm and a thickness of 90 µm could be obtained.

Also, in the foregoing stretching method, the stretching magnification was changed to 1.7 times, whereby a retardation film A-2 having a retardation of 275 nm at a wavelength of 550 nm and a thickness of 85 µm could be obtained.

Further, in the foregoing stretching method, the stretching magnification was changed to 2.8 times, whereby a retardation film A-3 having a retardation of 398 nm at a wavelength of 550 nm and a thickness of 72 µm could be obtained.

The characteristic values of the resin film A are shown in Table 1.

<Film Production Example 2>

Using the resin B obtained in Synthesis Example 2, a resin film B was obtained in the same manner as in Film Production Example 1. The resulting resin film B had an amount of the residual solvent of 0.5 %, a photoelastic coeffcient ($C_P$) of 6 ($\times 10^{-12}$ $Pa^{-1}$), and a stress-optical coefficient ($C_R$) of 2,000 ($\times 10^{-12}$ $Pa^{-1}$). Also, using the resin film B, a retardation film B-1 was obtained in the same manner as in Film Production Example 1, except that the stretching conditions were changed such that the stretching magnification was 1.15 times and that the heating temperature was 145 °C. This retardation film B-1 had a retardation of 135 nm at a wavelength of 550 nm and a thickness of 93 µm.

Also, the stretching magnification was changed to 1.3 times, whereby a retardation film B-2 having a retardation of 275 nm at a wavelength of 550 nm and a film thickness of 88.5 µm could be obtained.

Further, the stretching magnification was changed to 1.65 times, whereby a retardation film B-3 having a retardation of 398 nm at a wavelength of 550 nm and a film thickness of 86 µm could be obtained.

The characteristic values of the resin film B are shown in Table 1.

<Film Production Example 3>

Using the resin C obtained in Synthesis Example 3, a resin film C was obtained in the same manner as in Film Production Example 1. The resulting resin film C had an amount of the residual solvent of 0.5 %, a photoelastic coefficient ($C_P$) of 9 ($\times 10^{-12}$ $Pa^{-1}$), and a stress-optical coefficient ($C_R$) of 2,350 ($\times 10^{-12}$ $pa^{-1}$). Also, using the resin film C, a retardation film C-1 was obtained in the same manner as in Film Production Example 1, except that the

stretching conditions were changed such that the stretching magnification was 1.1 times and that the heating temperature was 130 °C. This retardation film C-1 had a retardation of 135 nm at a wavelength of 550 nm and a thickness of 95 µm.

Also, the stretching magnification was changed to 1.2 times, whereby a retardation film C-2 having a retardation of 275 nm at a wavelength of 550 nm and a film thickness of 89.5 µm could be obtained.

Further, the stretching magnification was changed to 1.4 times, whereby a retardation film C-3 having a retardation of 398 nm at a wavelength of 550 nm and a film thickness of 87 µm could be obtained.

The characteristic values of the resin film C are shown in Table 1.

Table 1

| | Tg (°C) | $C_P$, $C_R$ ($\times 10^{-12}$ $Pa^{-1}$) | Thickness (µm) | Amount of residual solvent (%) | Total light transmittance (%) | Retardation at 550 nm (nm) |
|---|---|---|---|---|---|---|
| Resin film A | 165 | 4, 1,750 | 100 | 0.5 | 93 | 6.8 |
| Resin film B | 140 | 6, 2,000 | 100 | 0.5 | 93 | 6.8 |
| Resin film C | 125 | 9, 2,350 | 100 | 0.5 | 93 | 6.8 |

<Rock crystal>

A cut plate of rock crystal having an optical axis in the plane was prepared so as to have a prescribed retardation and used for sticking to the retardation film.

The characteristic values of the rock crystal are shown in Table 2.

Table 2

| | Total light transmittance (%) | Retardation at 550 nm (nm) |
|---|---|---|
| Rock crystal A | 93 | 237 |
| Rock crystal B | 93 | 285 |
| Rock crystal C | 93 | 949 |
| Rock crystal D | 93 | 845 |
| Rock crystal E | 93 | 380 |

<Example 1>

The foregoing retardation film A-3 and rock crystal A were laminated using an acrylic adhesive having a thickness of 10 μm such that the respective optical axes defined +88 degrees based on the optical axis of A-3, thereby obtaining a wavelength plate A. When linearly polarized light in which the plane of vibration of polarization defined an angle of +45 degrees based on the optical axis of A-3 was made incident into the wavelength plate A from the A-3 side, "Re(λ)/λ" (wherein Re(λ) represents a retardation value in terms of nm against light having a wavelength of λ) was measured. As a result, the Re(λ)/λ laid between 0.24 and 0.26 against lights in a wavelength region of from 400 to 800 nm. Here, it was microscopically confirmed that the number of foreign matters of 10 μm or more in the wavelength plate A was not more than 10.

The mutual relationship of angle among the optical axis of the retardation film, the optical axis of rock crystal and the plane of vibration of incident polarization is shown in Fig. 1. Incidentally, with respect to the angle, the clockwise direction seen from the incident light side was defined as a positive angle, while the counterclockwise direction was defined as a negative angle.

<Example 2>

The foregoing retardation film B-2 and rock crystal B were laminated using an acrylic adhesive having a thickness of 10 μm such that the respective optical axes defined +43 degrees based on the optical axis of B-2, thereby obtaining a wavelength plate B. When linearly polarized light in which the plane of vibration of polarization defined an angle of +45 degrees based on the optical axis of B-2 was made incident into the wavelength plate B from the B-2 side, "Re(λ)/λ" laid between 0.4 and 0.55 against lights in a wavelength region of from 400 to 800 nm. Here, it was microscopically confirmed that the number of foreign matters of 10 μm or more in the wavelength plate B was not more than 10.

Incidentally, with respect to the angle, the clockwise direction seen from the incident light side was defined as a positive angle, while the counterclockwise direction was defined as a negative angle.

<Example 3>

The foregoing retardation film C-1 and rock crystal C were laminated using an acrylic adhesive having a thickness of 10 μm such that the respective optical axes defined +2 degrees based on the optical axis of C-1, thereby obtaining a wavelength plate C. When linearly polarized light in which the plane of vibration of polarization defined an angle of +45 degrees based on the optical axis of C-1 was made incident into the wavelength plate C from the C-1 side, "Re(λ)/λ" laid between 0.4 and 0.55 against lights having a wavelength of 405 nm and 650 nm, respectively and between 0.24 and 0.26 against light having a wavelength of 785 nm, respectively. Here, it was microscopically confirmed that the number of foreign matters of 10 μm or more in the wavelength plate C was not more than 10.

Incidentally, with respect to the angle, the clockwise direction seen from the incident light side was defined as a positive angle, while the counterclockwise direction was defined as a negative angle.

<Example 4>

The foregoing retardation film A-2 and rock crystal D were laminated using an acrylic adhesive having a thickness of 10 μm such that the respective optical axes defined +58 degrees based on the optical axis of A-2, thereby obtaining a wavelength plate D. When linearly polarized light in which the plane of vibration of polarization defined an angle of+75 degrees based on the optical axis of A-2 was made incident into the wavelength plate D from the A-2 side, "Re(λ)/λ" laid between 0.24 and 0.26 against lights having a wavelength of 405 nm and 650 nm, respectively and between 0.4 and 0.55 against light having a wavelength of 785 nm, respectively. Here, it was microscopically confirmed that the number of foreign matters of 10 μm or more in the wavelength plate D was not more than 10.

Incidentally, with respect to the angle, the clockwise direction seen from the incident light side was defined as a positive angle, while the counterclockwise direction was defined as a negative angle.

<Example 5>

The foregoing retardation film B-1 and rock crystal E were laminated using an acrylic adhesive having a thickness of 10 μm such that the respective optical axes defined +2 degrees based on the optical axis of B-1, thereby obtaining a wavelength plate E. When linearly polarized light in which the plane of vibration of polarization defined an angle of +45 degrees based on the optical axis of B-1 was made incident into the wavelength plate E from the B-1 side, "Re(λ)/λ" laid between 0.24 and 0.26 against light having a wavelength of 650 nm and between 0.4 and 0.55 against lights having a wavelength of 405 nm and 785 nm, respectively. Here, it was microscopically confirmed that the number of foreign matters of 10 μm or more in the wavelength plate E was not more than 10.

Incidentally, with respect to the angle, the clockwise direction seen from the incident light side was defined as a positive angle, while the counterclockwise direction was defined as a negative angle.

<Example 6>

A glass plate having a refractive index of 1.52 and a thickness of 0.2 mm was laminated on the surface of the film (B-1) of the wavelength plate E, thereby obtaining a wavelength plate F. When linearly polarized light in which the plane of vibration of polarization defined an angle of +45 degrees based on the optical axis of B-1 was made incident into the wavelength plate F from the B-1 side, "Re(λ)/λ" laid between 0.24 and 0.26 against light having a wavelength of 650 nm and between 0.4 and 0.55 against lights having a wavelength of 405 nm and 785 nm, respectively. Here, it was microscopically confirmed that the number of foreign matters of 10 μm or more in the wavelength plate F was not more than 10.

Incidentally, with respect to the angle, the clockwise direction seen from the incident light side was defined as a positive angle, while the counterclockwise direction was defined as a negative angle.

<Example 7>

Each of the wavelength plates A, B, C, D, E and F was allowed to stand under the environment at a temperature of 90 °C and a humidity of 90 %RH for 3,000 hours, and any change of "Re(λ)/λ" was examined using lights having a wavelength of 405 nm, 650 nm and 785 nm, respectively. As a result, even after a lapse of 3,000 hours, all of rates of change against the initial characteristics fell within 1 %, and it was noted that satisfactory stability was revealed.

<Comparative Example 1>

"Re(λ)/λ" of each of the foregoing retardation films A-1, A-2, A-3, B-1, B-2, B-3, C-1, C-2 and C-3 was measured using lights in a wavelength region of from 400 to 800 nm. As a result, when the wavelength was deviated to the short wavelength side or the long wavelength side on a basis of 550 nm, the deviation of "Re(λ)/λ" from 0.24 to 0.26 became large.

<Comparative Example 2>

"Re(λ)/λ" of each of the foregoing rock crystals A, B, C, D and E was measured using lights in a wavelength region of from 400 to 800 nm. As a result, when the wavelength went toward the short wavelength side on a basis of 550 nm, the "Re(λ)/λ" value became large, while when the wavelength went toward the long wavelength side, the "Re (λ)/λ" value became small. In consequence, on a basis of 550 nm, the deviation of "Re(λ)/λ" did not fall within a width of 0.1 in all of the rock crystals A, B, C, D and E.

<Comparative Example 3>

The foregoing retardation films A-1 and A-2 were laminated using an acrylic adhesive having a thickness of 10 μm such that the respective optical axes defined +60 degrees based on the optical axis of A-1, thereby obtaining a wavelength plate G When "Re(λ)/λ" of this wavelength plate G was measured, it was found to lay between 0.24 to 0.26 against lights having a wavelength of from 400 to 800 nm. However, this wavelength plate was allowed to stand under the environment at a temperature of 90 °C and a humidity of 90 %RH for 3,000 hours, and any change of "Re (λ)/λ" was examined in the same manner as in Example 4. As a result, after a lapse of 3,000 hours, a rate of change against the initial characteristics was 8 % at maximum.

Incidentally, with respect to the angle, the clockwise direction seen from the incident light side was defined as a positive angle, while the counterclockwise direction was defined as a negative angle.

<Comparative Example 4>

It was attempted to obtain a wavelength plate by laminating the rock crystal A and rock crystal B using an acrylic adhesive having a thickness of 10 μm. However, even by setting up the angle defined by the respective optical axes over and over, "Re(λ)/λ" did not lay between 0.24 and 0.26 against lights having a wavelength of from 400 to 800 nm. Also, even by setting up the angle defined by the respective optical axes over and over, "Re(λ)/λ" did not lay between 0.4 and 0.55 against lights having a wavelength of from 400 to 800 nm.

<Comparative Example 5>

The foregoing wavelength plate G was laminated on one surface of the glass plate as used in Example 1 using an acrylic adhesive having a thickness of 10 μm, thereby obtaining a wavelength plate H. When "Re(λ)/λ" of this wavelength plate E was measured, it was found to lay between 0.24 to 0.26 against lights having a wavelength of from 400 to 800 nm. However, this wavelength plate was allowed to stand under the environment at a temperature of 90 °C and a humidity of 90 %RH for 3,000 hours, and any change of "Re(λ)/λ" was examined in the same manner as in Example 4. As a result, after a lapse of 3,000 hours, a rate of change against the initial characteristics was 3 % at maximum.

INDUSTRIAL APPLICABILITY

The laminated wavelength plate of the invention is a combination of a retardation film made of a cyclic olefin based resin (a resin film capable of imparting a retardation to transmitted light) and an anisotropic crystal plate and is a laminated wavelength plate which can impart peculiar optical characteristics to light having an arbitrary wavelength and has excellent durability such that the initial characteristics can be kept over a long period of time. In particular, in the case where rock crystal is used as an inorganic single crystal plate, not only a laminated wavelength having satisfactory optical characteristics is obtained, but also since the cyclic olefin based resin itself has high heat resistance, low hygroscopicity and high adhesion to various kinds of materials and is excellent in stability of retardation, a wavelength plate having higher durability is obtained. For these reasons, by using the laminated wavelength plate of the invention, it is possible to produce an optical information recording and reproducing device with high performance cheaply over a long period of time. Optical information recording and reproducing devices using the laminated wavelength plate of the invention can be applied to any of a reproduction-only recording medium, a write-once type recording medium, and a rewritable type recording medium regarding recording the foregoing voices and images and can be used for recording devices such as CD-ROM, CD-R, and rewritable DVD and OA instruments using the same, acoustic reproducing devices such as CD, image reproducing devices such as DVD and AV instruments using the same, game machines using the foregoing CD or DVD, and the like.

## Claims

1. A laminated wavelength plate comprising a cyclic olefin based resin film and a transparent crystal plate having optical anisotropy bonded to each other, which is **characterized in that** an angle defined by an optical axis of the cyclic olefin based resin film and an optical axis of the transparent crystal plate having optical anisotropy falls within the range of from 0 to 90 degrees.

2. The laminated wavelength plate according to claim 1, wherein a cyclic olefin based resin film in which against light having an arbitrary wavelength in the range of from 400 to 800 nm, a value of the following expression (a):

$$Re(\lambda)/\lambda \qquad (a)$$

(in the expression, $Re(\lambda)$ represents a retardation value in terms of nm against light having a wavelength of $\lambda$) is [(0.2 to 0.3) + X] or [(0.40 to 0.55) + Y] (in the expressions, X represents 0 or the number of an integral multiple of 0.5, and Y represents 0 or an integer of 1 or more) is used.

**3.** The laminated wavelength plate according to claim 1 or 2, wherein against plural lights having a different wavelength in the range of from 400 to 800 nm, the values of the foregoing expression (a) in wavelengths of the respective lights are independently [(0.2 to 0.3) + X] or [(0.40 to 0.55) + Y] (in the expressions, X represents 0 or the number of an integral multiple of 0.5, and Y represents 0 or an integer of 1 or more).

**4.** The laminated wavelength plate according to any one of claims 1 to 3, wherein the cyclic olefin based resin is at least one member selected from the group consisting of

(1) a ring-opening polymer of a specific monomer represented by the following general formula (1);
(2) a ring-opening copolymer of a specific monomer represented by the following general formula (1) and a copolymerizable monomer;
(3) a hydrogenated (co)polymer of the foregoing ring-opening (co)polymer (1) or (2);
(4) a (co)polymer resulting from cyclization of the foregoing ring-opening (co)polymer (1) or (2) by the Friedel-Crafts reaction and then hydrogenation;
(5) a saturated copolymer of a specific monomer represented by the following general formula (1) and an unsaturated double bond-containing compound; and
(6) an addition type (co)polymer of at least one monomer selected from a specific monomer represented by the following general formula (1), a vinyl based cyclic hydrocarbon based monomer and a cyclopentadiene based monomer, and a hydrogenated (co)polymer thereof:

General Formula (1)

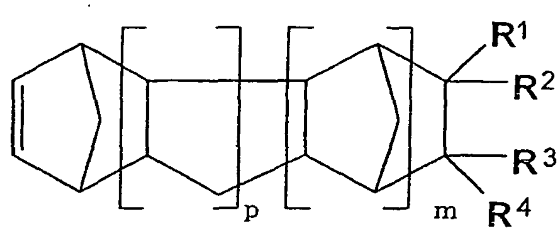

[in the formula, $R^1$ to $R^4$ each represents a hydrogen atom, a halogen atom, a hydrocarbon group having from 1 to 30 carbon atoms, or other monovalent organic group, and may be the same or different; $R^1$ and $R^2$, or $R^3$ and $R^4$ may be taken together to form a divalent hydrocarbon group; $R^1$ or $R^2$ and $R^3$ or $R^4$ may be bonded to each other to form a monocyclic or polycyclic structure; m represents 0 or a positive integer; and p represents 0 or a positive integer.]

**5.** The laminated wavelength plate according to any one of claims 1 to 4, wherein the transparent crystal plate having optical anisotropy is rock crystal.

FIG. 1

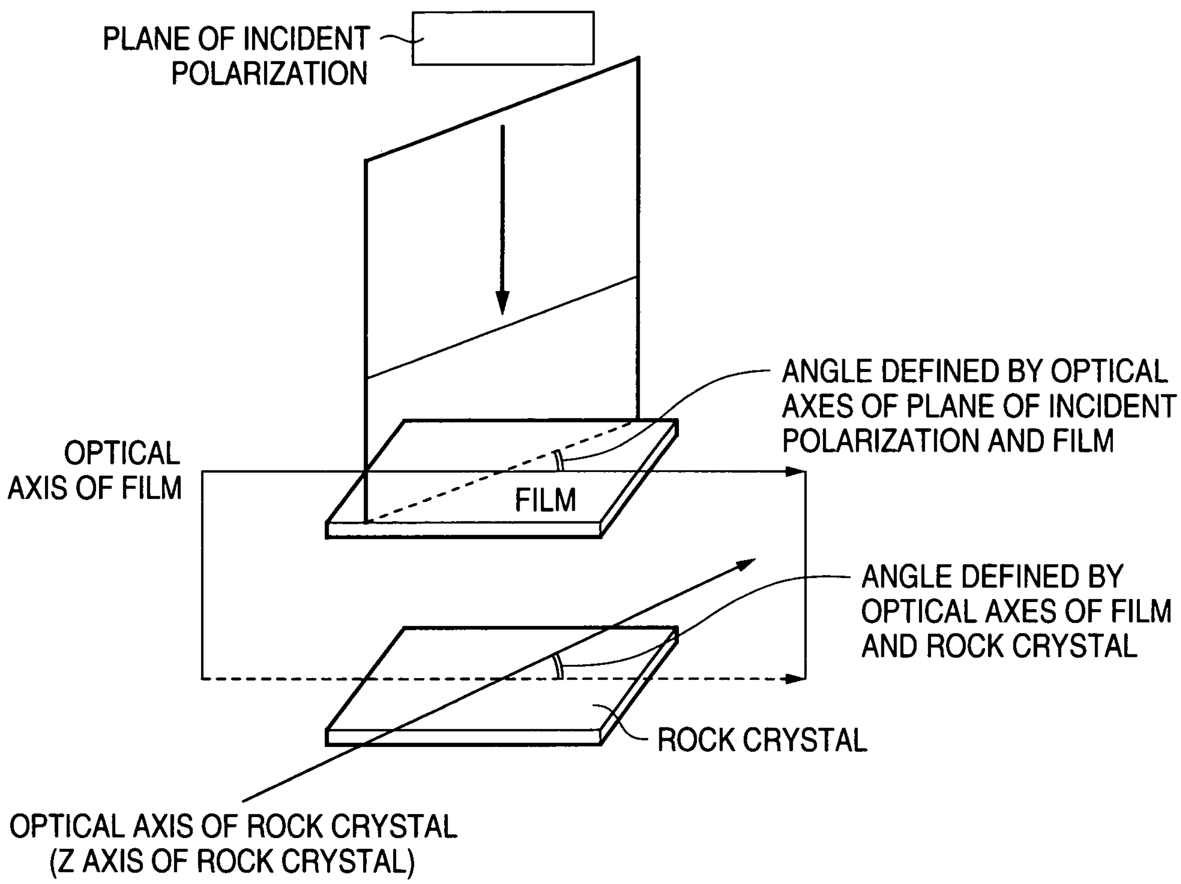
PLANE OF INCIDENT POLARIZATION
ANGLE DEFINED BY OPTICAL AXES OF PLANE OF INCIDENT POLARIZATION AND FILM
OPTICAL AXIS OF FILM
FILM
ANGLE DEFINED BY OPTICAL AXES OF FILM AND ROCK CRYSTAL
ROCK CRYSTAL
OPTICAL AXIS OF ROCK CRYSTAL (Z AXIS OF ROCK CRYSTAL)

**INTERNATIONAL SEARCH REPORT**

International application No.
PCT/JP2004/002220

A. CLASSIFICATION OF SUBJECT MATTER
Int.Cl⁷ G02B5/30, G11B7/135, C08J5/18, B32B7/02

According to International Patent Classification (IPC) or to both national classification and IPC

B. FIELDS SEARCHED

Minimum documentation searched (classification system followed by classification symbols)
Int.Cl⁷ G02B5/30, G11B7/135, C08J5/18, B32B7/02

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-116321 A (Toyo Communication Equipment Co., Ltd.),<br>19 April, 2002 (19.04.02),<br>Full text; all drawings<br>(Family: none) | 1,5<br>2-4 |
| Y | JP 2003-14901 A (JSR Corp.),<br>15 January, 2003 (15.01.03),<br>Full text; all drawings<br>& EP 1397709 A1 & US 2004047056 A1<br>& US 2004057141 A1 | 2-4 |
| A | JP 5-27118 A (Nitto Denko Corp.),<br>05 February, 1993 (05.02.93),<br>Full text; all drawings<br>(Family: none) | 1-5 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 May, 2004 (12.05.04) | 25 May, 2004 (25.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.
PCT/JP2004/002220

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-68816 A (Sharp Corp.), 10 March, 1998 (10.03.98), Full text; all drawings (Family: none) | 1-5 |

Form PCT/ISA/210 (continuation of second sheet) (January 2004)